Europäisches Patentamt

European Patent Office

Office européen des brevets

(19)

(11) Veröffentlichungsnummer: **0 196 993**
**A2**

(12) ## EUROPÄISCHE PATENTANMELDUNG

(21) Anmeldenummer: 86730050.1

(22) Anmeldetag: 19.03.86

(51) Int. Cl.⁴: **G 01 N 21/35**

(30) Priorität: 04.04.85 DE 3512861

(43) Veröffentlichungstag der Anmeldung:
08.10.86 Patentblatt 86/41

(84) Benannte Vertragsstaaten:
AT BE CH DE FR GB IT LI LU NL SE

(71) Anmelder: **Dr. THIEDIG & CO.**
**Prinzenallee 78-79**
**D-1000 Berlin 65(DE)**

(72) Erfinder: **Merkel, Wolfgang, Dipl.-Ing.**
**Bartningallee 7**
**D-1000 Berlin 21(DE)**

(74) Vertreter: Bergmann, Jürgen, Dipl.-Ing.
**Patentanwälte PFENNING, MEINIG & PARTNER**
**Kurfürstendamm 170**
**D-1000 Berlin 15(DE)**

(54) **Vorrichtung zur kontinuierlichen Messung der Konzentration eines Gases.**

(57) Es wird eine Vorrichtung zur kontinuierlichen Messung der Konzentration eines mehratomigen, nicht elementaren Gases mit einer getakteten Strahlungsquelle, einer der Strahlungsquelle nachgeschalteten, von dem Gas durchströmten Absorptionsküvette und einer strahlungsempfindlichen Empfängeranordnung, die ein Meßsignal und ein Bezugssignal an eine Rechenschaltung abgibt, vorgeschlagen. Die Empfängeranordnung ist mit einem photoelektrischen Empfänger versehen, der eine Substratscheibe mit mindestens zwei getrennten Sensorbereichen aufweist, wobei den Sensorbereichen Filter unterschiedlicher Durchlaßbereiche vorgeschaltet sind.

Fig. 1

0196993

## Vorrichtung zur kontinuierlichen Messung der Konzentration eines Gases

Die Erfindung betrifft eine Vorrichtung zur kontinuierlichen Messung der Konzentration eines mehratomigen, nicht elementaren Gases nach dem Oberbegriff des Anspruchs 1.

Aus Hengstengerg/Sturm/Winkler: "Messen, Steuern und Regeln in der chemischen Technik", Band II, 3. Auflage 1980, Seiten 24/25 ist ein Einstrahl-Wechsellichtphotometer bekannt, bei dem zwischen einer konstanten Strahlungsquelle und einer von dem zu untersuchenden Gas durchströmten Absorptionsküvette eine drehbare Filterscheibe angeordnet ist. In dieser sind radial-symmetrisch zwei Interferenzfilter vorgesehen, deren Durchlaßbereich zum einen in dem Bereich des Absorptionsmaximum des zu untersuchenden Gases und zum anderen in dem Bereich, in dem das Gas nur eine geringe oder möglichst keine Absorption aufweist,

liegen. Diese nacheinander in den Strahlengang gebrachten Interferenzfilter erzeugen abwechselnd ein Meßlichtbündel und ein Vergleichslichtbündel, die auf einen photoelektrischen Empfänger treffen. Die entsprechenden Ausgangssignale des photoelektrischen Empfängers werden miteinander ins Verhältnis gesetzt und ergeben so ein Maß für die Konzentration des zu untersuchenden Gases.

Um die Nachteile einer Sukzessivmessung hinsichtlich kurzfristiger Änderungen in der Meßapparatur und um die Verwendung der rotierenden Filterscheibe und des hierfür erforderlichen geregelten Antrieb zu vermeiden, ist aus der DE-OS 32 38 179 eine Anordnung zur kontinuierlichen Messung der Konzentration eines mehratomigen, nicht elementaren Gases mit einem nicht dispersiven Infrarot-Einstrahlphotometer bekannt, bei der eine von einer getakteten Strahlungsquelle Wechsellichtstrahlung nach Durchgang durch eine von einem Gas durchströmte Absorptionsküvette gleichzeitig auf zwei Photoempfänger trifft, wobei nur einem der Photoempfänger ein Filter vorgeschaltet ist und die Ausgangssignale der Photoempfänger in einer quotienten Schaltung ausgewertet werden. Dabei ist das Filter ein Interferenzfilter, dessen Durchlaßbereich mit dem größten Absorptionsmaximum des Gases, dessen Konzentration gemessen wird, übereinstimmt. Die aus dieser Druckschrift bekannte Vorrichtung weist den Nachteil auf, daß die zwei photoelektrischen Empfänger in ihren Fertigungstoleranzen und ihrem Temperaturverhalten u.dgl. aufeinander abgestimmt sein müssen, oder daß zusätzliche Vorkehrungen für eine Temperaturkompensation getroffen werden müssen, da anderenfalls die Meßergebnisse verfälscht werden. Der Erfindung liegt daher

0196993

die Aufgabe zugrunde, eine Vorrichtung zur kontinuierlichen Messung der Konzentration eines mehratomigen, nicht elementaren Gases zu schaffen, die eine genauere Messung insbesondere unter Ausschaltung der Temperaturdriften und Fertigungstoleranzen der Empfängeranordnung, der Alterung von Strahlungsquelle und Empfängeranordnung und der Ausschaltung von Verschmutzungen ermöglicht.

Diese Aufgabe wird erfindungsgemäß durch die kennzeichnenden Merkmale des Hauptanspruchs in Verbindung mit den Merkmalen des Oberbegriffs gelöst. Durch Vorsehen eines Empfängers, der auf einer Substrat scheibe mindestens zwei getrennte Sensorbereiche aufweist, wobei die Sensorbereiche mit Filtern unterschiedlicher Durchlaßbereiche abgedeckt sind, wird eine sehr genaue Messung erreicht, da beide Sensorbereiche auf einem Substrat durch einen einheitlichen Fertigungsprozeß entstehen und sich durch ihre nahe räumliche Anordnung auf dem gleichen Temperaturniveau befinden und zusätzlich gemeinsam durch ein Gehäuse abgeschirmt werden. Der beiden Sensorbereichen gemeinsame Temperatureinfluß, sowie die Verschmutzung der Küvette, der Alterung von Strahlungsquelle und Empfänger werden durch die Bildung des Verhältnisses zwischen von dem einen Sensorbereich gelieferten Meßsignal und von dem anderen Sensorbereich gelieferten Bezugssignal ausgeschaltet.

Durch die in den Unteransprüchen angegebenen Maßnahmen sind vorteilhafte Weiterbildungen und Verbesserungen möglich. Besonders vorteilhaft ist die Verwendung von drei Sensorbereichen auf einen Substrat, wodurch die Konzentration von zwei Gasen unter Verhältnisbildung mit einem Bezugssignal gemessen werden kann,oder neben dem die Konzentration eines Gases erfassenden Meßsignal eine Störgröße erfaßt und eliminiert werden kann, die im Absorptionsmaximum des zu messenden Gases liegt.

Um eine genaue Messung durchführen zu können, ist bei dem verwendeten Empfänger eine Strahlungsquelle mit einer gleichmäßigen Strahlungsverteilung notwendig. Es wird ein Flächenstrahler, insbesondere ein auf ein Substrat aufgedampfter Widerstand vorgeschlagen, der eine sehr gleichmäßige Strahlungsverteilung, eine große mechanische Stabilität und eine geringe Energieaufnahme aufweist. Bei der Verwendung eines Flächenstrahlers aus Platin werden die Eigenschaften der Strahlungsquelle weiter verbessert, da der Strahler korrosionsfest und alterungsbeständig ist.

Die Erfindung ist in der Zeichnung dargestellt und wird in der nachfolgenden Beschreibung erläutert. Es zeigen:

Fig. 1    Die ansich bekannte schaltungsgemäße Ausgestaltung einer Vorrichtung nach dem Oberbegriff des Hauptanspruchs mit der Verwendung der erfindungsgemäßen Empfängeranordnung,

Fig. 2    den schematischen Aufbau des Empfängers mit zwei Sensorbereichen und

Fig. 3    den schematischen Aufbau des Empfängers mit drei Sensorbereichen.

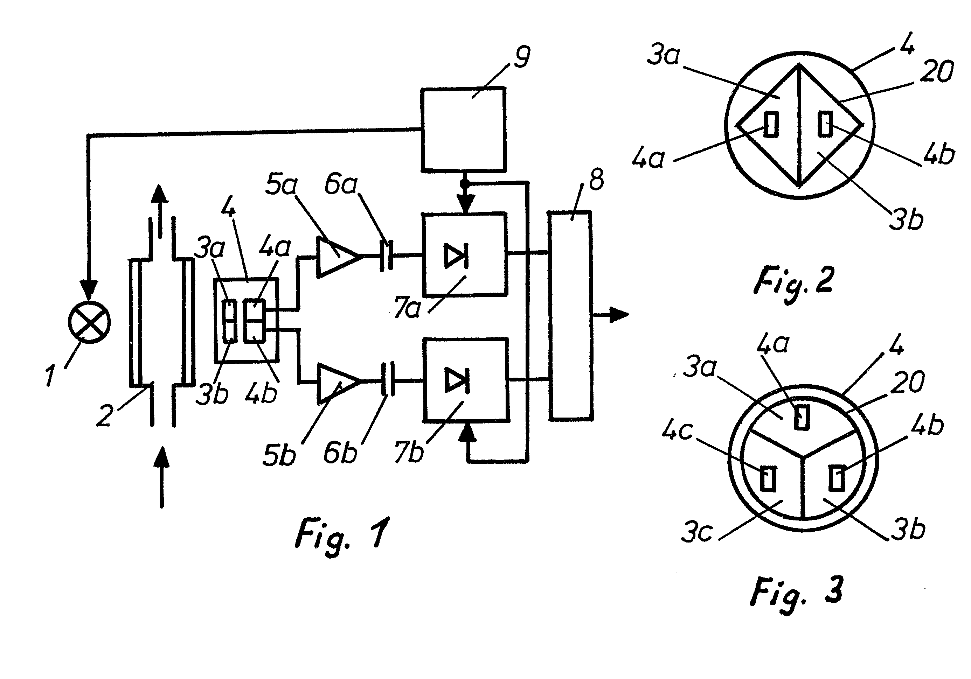

Eine von einer getakteten Gleichspannungsquelle 9 gespeiste Strahlungsquelle 1 gibt Strahlungsimpulse entsprechend der Frequenz der getakteten Gleichspannung, vorzugsweise im Bereich von 1 bis 30 Hz ab. Der Strahlungsquelle 1 nachgeschaltet ist eine Absorptionsküvette 2, durch die das oder die zu messenden Gase hindurchgeleitet werden. Die durch die Absorptionsküvette 2 durchgehende Strahlung trifft auf einen Empfänger 4, der als pyroelektrischer Empfänger ausgebildet sein kann. Der Empfänger 4 weist entsprechend Fig. 2 eine Substratscheibe 20 auf, die mit zwei dicht-beieinander liegenden Sensorbereichen 4a, 4b versehen ist. Die Sensorbereiche 4a, 4b sind jeweils mit einem Filter 3a, 3b unterschiedlicher Durchlaßkurve abgedeckt. Die Ausgänge des Empfängers sind über je einen Verstärker 5a, 5b und Kondensator 6a, 6b mit je einem Eingang eines Synchrongleichrichters 7a, 7b verbunden. Die Synchrongleichrichter 7a, 7b werden von der Gleichspannungsquelle 9 gesteuert. Die Ausgänge der Gleichrichter 7a, 7b führen zu einer Quotientenschaltung 8, die den Quotienten, d.h. das Verhältnis aus den beiden ihr zugeführten Signalen bildet.

D e r   Sensorbereich 4a, der die Konzentration des zu messenden Gases erfassen soll, ist mit einem Interferenzfilter       abgedeckt, dessen Durchlaßbereich mit dem Absorptionsmaximum des zu messenden Gases übereinstimmt. Der andere Sensorbereich 4b, der das Bezugssignal liefern soll, kann mit einem Filter mit breitbandigem Durchlaßbereich versehen sein, wobei im Extremfalle das Filter 3b weggelassen werden kann, so daß der gesamte Spektralbereich der Strahlungsquelle unter Berücksichtigung der Veränderungen durch die Absorptionsküvette erfaßt wird. Beide Sensorbereiche 4a, 4b können aber auch einteilig, d.h. mit einem Stück Saphir oder einem ähnlichen Träger für Interferenzverlaufsfilter abgedeckt sein, wobei der eine Teil des Saphirs mit dem Interferenzfilter bedampft ist und der andere Teil keine Bedampfung aufweist. Da bei einem den Sensorbereich 4b (Bezugssignal) zugeordneten breitbandigen Durchlaßbereich das Absorptionsmaximum des zu messenden Gases, d.h. die Durchlaßkurve des Sensorbereiches 4a (Meßsignal) miterfaßt wird, kann in diesem Fall eine geringe Dämpfung des Ausgangssignals der Quotientenschaltung 8 auftreten. Um diese Dämpfung vollständig auszuschalten, kann für das dem Sensorbereich 4b (Bezugssignal) zugeordnete Filterelement ein Interferenzfilter mit einer engen Durchlaßkurve gewählt werden, die in einem anderen Wellenlängenbereich als der des Interferenzfilters 3a liegt. Auch hier sind die Filter 3a, 3b auf einem Substrat aufgebracht.

In dem bevorzugten Ausführungsbeispiel sind die Filter 3a, 3b in dem die Substratscheibe 20 mit den Sensorbereichen 4a, 4b aufnehmenden Gehäuse integriert, in dem ebenfalls die für die Beschaltung der Sensorbereiche 4a, 4b notwendige elektrische Beschaltung, wie Ableitwiderstände und Feldeffekttransistoren aufgenommen sind. Selbstverständlich können, wenn notwendig, auch mehrere Interferenzfilter übereinander angeordnet sein, wobei sich die beidseitige Bedampfung eines Trägers für Interferenzverlaufsfilter anbietet.

In Fig. 3 ist ein weiteres Ausführungsbeispiel eines bei der erfindungsgemäßen Vorrichtung ver-

0196993

wendeten Empfängers 4 dargestellt, bei dem auf der Kristallscheibe 20 drei Sensorbereiche 4a, 4b, 4c dicht beieinanderliegend angeordnet sind, die entsprechend mit einem Filter mit drei Durchlaßbereichen 3a, 3b, 3c abgedeckt sind. Mit einem derartigen Empfänger 4 ist es möglich, die Konzentration zweier durch die Absorptionsküvette 2 geleiteter Gase mittels der Sensorbereiche 4a, 4c mit den Absorptionsmaximen der Gase entsprechenden Filtern 3a, 3c zu messen, wobei wiederum der Sensorbereich 4b mit dem Filter 3b das Bezugssignal liefert. Bei einer derartigen Ausführung werden zwei Quotienten gebildet, wobei die Schaltungsanordnung nach Fig. 1 entsprechend abgewandelt werden muß.

Der dritte Sensorbereich 4c kann auch zur Entfernung von Störkomponenten dienen, die das Meßergebnis verfälschen. So kann z.B. Wasserdampf in dem zu messenden Gas enthalten sein, dessen Absorptionskurve teilweise in der Filterkurve des zu messenden Gases liegt. Der Durchlaßbereich des Filters 3c ist dann so zu wählen, daß er im Absorptionsbereich von Wasserdampf aber außerhalb der Filterkurve des zu messenden Gases liegt. Das so durch den Sensorbereich 4c erzielte Signal kann zur Kalibrierung des Meßsignals verwendet werden.

Die in den bekannten Vorrichtungen verwendeten Strahlungsquellen sind üblicherweise Strahler mit Wendeln, die mechanisch sehr anfällig sind und deren Strahlungsverteilung aufgrund ihres Gefüges nicht sehr gleichmäßig ist. Für die vorliegende Vorrichtung sind aber IR-Strahler mit einer gleichmäßigen Strahlungsverteilung

notwendig, um gute und genaue Meßergebnisse zu erzielen. Als Strahlungsquelle wird daher im vorliegenden Ausführungsbeispiel ein Flächenstrahler verwendet, der als auf ein Substrat aufgedampfter oder aufgesputterter Widerstand ausgebildet ist. Dieser Widerstand ist vorzugsweise mäanderförmig oder spiralförmig ausgebildet und besteht aus Nickel, Nickelchrom , aber vorzugsweise aus Platin, da er dann korrosionsfest und alterungsbeständiger ist. Ein derartiger Widerstand weist eine konstant verteilte Strahlungsleistung auf, wobei die Energieaufnahme gering ist.

Patentansprüche

1. Vorrichtung zur kontinuierlichen Messung der Konzentration eines mehratomigen, nicht elementaren Gasen mit einer getakteten Strahlungsquelle, einer der Strahlungsquelle nachgeschalteten, von dem Gas durchströmten Absorptionsküvette und einer strahlungsempfindlichen Empfängeranordnung, die ein Meßsignal und ein Bezugssignal an eine Rechenschaltung abgibt, d a d u r c h  g e k e n n z e i c h n e t, daß die Empfängeranordnung mit einem photoelektrischen Empfänger (4) versehen ist, der eine Substrat scheibe (20) mit mindestens zwei getrennten Sensorbereichen (4a, 4b) aufweist, wobei den Sensorbereichen (4a, 4b) Filter (3a, 3b) unterschiedlicher Durchlaßbereiche vorgeschaltet sind.

2. Vorrichtung nach Anspruch 1, dadurch gekennzeichnet, daß die Filter (3a, 3b) im Empfänger integriert sind.

3. Vorrichtung nach Anspruch 1 oder Anspruch 2, dadurch gekennzeichnet, daß der das Meßsignal liefernde Sensorbereich (4a) mit einem Interferenzfilter (3a) abgedeckt ist, dessen Durchlaßbereich mit dem größten Absorptionsmaximum des zu messenden Gases übereinstimmt.

4. Vorrichtung nach einem der Ansprüche 1 bis 3, dadurch gekennzeichnet, daß der das Bezugssignal liefernde Sensorbereich (4b) mit einem breitbandigen Filter (3b) abgedeckt ist.

5. Vorrichtung nach einem der Ansprüche 1 bis 3,

0196993

dadurch gekennzeichnet, daß der das Bezugssignal liefernde Sensorbereich (4b) mit einem schmalbandigen Filter (3b) abgedeckt ist, dessen Durchlaßbereich außerhalb des Durchlaßbereiches des Filters (3a) vor dem das Meßsignal liefernden Sensorbereich (4a) liegt.

6. Vorrichtung nach einem der Ansprüche 1 bis 5, dadurch gekennzeichnet, daß der Empfänger (4) drei getrennte Sensorbereiche (4a, 4b, 4c) aufweist, wobei zwei Sensorbereiche (4a, 4c) zur Messung zweier verschiedener, in der Absorptionsküvette vorhandener Gase und der dritte Sensorbereich (4b) zur Abgabe des Bezugssignals dient, und wobei die drei Sensorbereiche (4a, 4b, 4c) mit Filtern (3a, 3b, 3c) mit jeweils unterschiedlichen Durchlaßbereichen abgedeckt sind.

7. Vorrichtung nach einem der Ansprüche 1 bis 6, dadurch gekennzeichnet, daß die Strahlungsquelle (1) als in seiner Größe an den Empfänger (4) angepaßter Flächenstrahler ausgebildet ist.

8. Vorrichtung nach Anspruch 7, dadurch gekennzeichnet, daß der Flächenstrahler ein auf ein Substrat aufgebrachter Widerstand ist.

9. Vorrichtung nach Anspruch 7 oder 8, dadurch gekennzeichnet, daß der Flächenstrahler mäanderförmig ausgebildet ist.

10. Vorrichtung nach Anspruch 7 oder 8, dadurch gekennzeichnet, daß der Flächenstrahler spiralförmig ausgebildet ist.

11. Vorrichtung nach einem der Ansprüche 8 bis 10, dadurch gekennzeichnet, daß der Widerstand aus Platin besteht.

12. Vorrichtung nach einem der Ansprüche 1 bis 11, dadurch gekennzeichnet, daß alle Filter (3a, 3b, 3c) auf einem Substrat aufgebracht sind.

0196993

Fig. 1

Fig. 2

Fig. 3